## Europäisches Patentamt

## European Patent Office

## Office européen des brevets

(19)

(11) Numéro de publication: **0 124 415**
**B1**

## FASCICULE DE BREVET EUROPÉEN

(12)

(45) Date de publication du fascicule du brevet:
**29.06.88**

(21) Numéro de dépôt: **84400752.6**

(22) Date de dépôt: **16.04.84**

(51) Int. Cl.⁴: **G 01 F 23/28**

(54) **Sonde optique.**

(30) Priorité: **22.04.83 FR 8306672**

(43) Date de publication de la demande:
**07.11.84 Bulletin 84/45**

(45) Mention de la délivrance du brevet:
**29.06.88 Bulletin 88/26**

(84) Etats contractants désignés:
**CH DE FR GB IT LI**

(56) Documents cité:
**CH-A-404 224**
**DE-A-3 026 411**
**FR-A-566 220**
**FR-A-2 213 487**
**GB-A-2 002 905**
**US-A-3 834 235**
**US-A-4 286 464**
**US-A-4 304 462**

**PATENTS ABSTRACTS OF JAPAN, vol. 7, no. 90 (P-191) 1235 , 14 avril 1983; JP-A-58 18 126 (MATSUSHITA DENKI SANGYO K.K.) 02-02-1983**

(73) Titulaire: **ELECTRICITE DE FRANCE Service National, 2, rue Louis Murat, F-75008 Paris (FR)**

(72) Inventeur: **Denis, Jean, Chemin des Sablons, F-78600 Mesnil Le Roi (FR)**
Inventeur: **Decaudin, Jean Michel, 24, Allée Jean Sébastien Bach, F-13880 Velaux (FR)**

(74) Mandataire: **Mongrédien, André, c/o BREVATOME 25, rue de Ponthieu, F-75008 Paris (FR)**

EP 0 124 415 B1

## Description

La présente invention concerne une sonde optique.

Cette sonde optique s'applique à la détection de l'interface de séparation de deux milieux d'indices optiques différents, contenus dans une enceinte et, plus particulièrement, à la détection du niveau de l'eau dans l'enceinte d'un générateur de vapeur d'une centrale nucléaire. Elle s'applique aussi à la détection de compositions de milieux diphasiques, à partir de leurs indices optiques de réfraction.

On sait que la détection de l'interface de séparation de deux milieux d'indices optiques différents contenus dans une enceinte est délicate, notamment lorsque l'enceinte est fermée et le milieu est hostile. C'est le cas par exemple dans les générateurs de vapeur des centrales nucléaires à eau ordinaire pressurisée, dans lesquels la zone de passage de l'eau, de la phase liquide à la phase vapeur, est fluctuante et mal connue. On sait aussi que la détection de compositions de milieux diphasiques contenus dans une enceinte est délicate.

L'interface de séparation entre deux milieux d'indices optiques différents et plus particulièrement le niveau de l'eau dans l'enceinte d'un générateur de vapeur par exemple, peut être défini, à partir de la différence des pressions statiques relevées par une sonde comprenant des détecteurs de pression situés à deux niveaux différents, sur une même génératrice de l'enceinte cylindrique du générateur. L'un de ces détecteurs est situé en dessous du niveau de l'eau, tandis que l'autre est situé audessus de ce niveau, dans la partie de l'enceinte contenant la vapeur. Les mesures de pression peuvent être perturbées de façon transitoire ou permanente par des phénomènes d'écoulements secondaires de l'eau entre ces deux détecteurs. De plus, les mesures obtenues à partir de ces détecteurs peuvent se révéler peu fiables, en cas de dépressurisation accidentelle du générateur.

On connaît d'autres sondes permettant de détecter l'interface de séparation d'un milieu liquide et d'un milieu gazeux ; parmi ces sondes on peut citer :

- les sondes thermiques : elles sont constituées par un ensemble d'éléments chauffants ; le niveau de l'eau dans un générateur de vapeur par exemple est détecté par une mesure de la conductivité thermique de ces éléments chauffants, cette conductivité variant en fonction de la position de l'élément chauffant qui peut être situé dans le liquide ou hors de celui-ci. Ces sondes thermiques sont très vite détériorées par les liquides à haute température et fournissent des mesures peu précises,

- les sondes électriques : elles sont constituées par une série d'électrodes ; la mesure des variations de résistance entre deux électrodes successives donne une indication de niveau. Ces sondes sont fragiles et très sensibles aux parasites,

- les sondes acoustiques : elles sont souvent utilisées pour mesurer des niveaux de liquides mais elles sont difficilement exploitables dans des liquides présentant des températures élevées et dans des gaz à haute pression,

- les sondes nucléaires : le fonctionnement de ces sondes est fondé sur l'absorption d'un rayonnement nucléaire dans un milieu liquide. Elles se détériorent facilement à haute température,

- les sondes optiques : l'apparition récente des fibres optiques et des composants optoélectroniques à permis de développer des sondes optiques pour la détection de l'interface de séparation entre deux milieux d'indices optiques différents. Ces sondes comprennent un moyen optique généralement constitué par un prisme de verre, capable de réfracter ou de réfléchir un rayon lumineux incident. Ce prisme est placé dans l'enceinte contenant deux milieux d'indices de réfraction différents : un liquide et un gaz par exemple. Lorsque ce prisme est situé dans le liquide, tout rayon lumineux incident est réfracté par le prisme, tandis que lorsque le prisme est situé audessus de la surface du liquide, tout rayon lumineux incident est réfléchi par le prisme. Une fibre optique d'émission éclairée par une source lumineuse permet de transmettre un rayon lumineux incident jusqu'au prisme, tandis qu'une fibre optique de réception permet de transmettre le rayon lumineux éventuellement réfléchi dans le prisme, vers un détecteur optoélectronique. La présence ou l'absence de rayons réfléchis permet donc de détecter l'interface de séparation entre le liquide et le gaz connaissant l'indice optique du matériau constituant le prisme, il est aussi possible de déterminer la composition de deux milieux diphasiques, à partir de leurs indices. Si l'un des milieux a un indice supérieur à celui du prisme, tout rayon incident est réfracté. Au contraire, si l'un des milieux a un indice inférieur à celui du prisme, tout rayon incident est réfléchi. Ce type de sonde est décrit par exemple dans le brevet FR-A-2 213 487.

Les sondes optiques sont les plus utilisées mais elles présentent des inconvénients : l'arête du prisme est fragile et la sonde peut être facilement détériorée. De plus, en milieu thermiquement ou chimiquement hostile, le verre constituant les prismes se détériore facilement et la détection d'interfaces devient alors impossible. Les fibres optiques utilisées dans ces sondes sont mal protégées contre les liquides à haute température ou contre les rayonnements nucléaires par exemple. Généralement, ces sondes ne comportent qu'un seul prisme et ne permettent pas de détecter différents niveaux d'interfaces. Enfin, l'orientation des prismes par rapport aux rayons lumineux incidents est critique et doit être très précise : l'arête du prisme doit être perpendiculaire au plan contenant le rayon incident et le rayon éventuellement réfléchi. Enfin, lorsque la sonde doit être utilisée en milieu hostile, le prisme doit être fixé à un boîtier étanche et cette fixation pose des problèmes d'étanchéité liés aux contraintes thermiques subies par le prisme. C'est le cas par exemple des sondes décrites dans les brevets US-A-4 286 464 et GB-A-2 002 905.

La présente invention a pour but de remédier à ces inconvénients et notamment de réaliser une sonde optique qui comprend un moyen optique de réfraction ou de réflexion d'un rayon incident, ne présentant aucune arête fragile et qui est constitué dans un matériau qui ne se détériore pas dans un milieu thermiquement ou chimiquement hostile ; cette sonde utilise aussi des fibres optiques qui sont protégées contre les hautes températures et contre les rayonnements; la sonde de l'invention permet grâce à l'utilisation d'une pluralité de moyens optiques de réfraction et de réflexion, de mesurer les niveaux variables d'interfaces entre des milieux d'indices différents contenus dans une enceinte, notamment à haute température et chimiquement hostiles. La forme conique du moyen optique permet de résoudre facilement les problèmes d'étanchéité lors de la fixation de ce moyen optique à un boîtier, par l'intermédiaire d'un couvercle étanche, en présence de contraintes thermiques.

L'invention a pour objet une sonde optique pour la détection de l'interface de séparation de deux milieux hostiles d'indices optiques différents contenus dans une enceinte, comprenant au moins un cône de révolution constitué dans une matière transparente d'indice de réfraction prédéterminé, capable de réfracter un rayon lumineux incident s'il est situé dans l'un des deux milieux dont l'indice de réfraction est supérieur à l'indice prédéterminé et capable de réfléchir ce rayon lumineux incident s'il est situé dans l'un des deux milieux dont l'indice est inférieur à l'indice prédéterminé, un boîtier étanche dont une face supporte une embase du cône, caractérisée en ce qu'elle comporte au moins une paire de fibres optiques traversant le boîtier et comprenant une fibre optique d'émission pour transmettre le rayon lumineux incident depuis une source lumineuse vers la base du cône et une fibre optique de réception pour transmettre à un détecteur optoélectronique le rayon éventuellement réfléchi, la source et le détecteur étant extérieurs à l'enceinte, un couvercle fermant le boîtier et muni d'un orifice conique de passage du cône et dont le pourtour s'appuie sur le cône, un joint d'étanchéité interposé entre l'embase du cône et ladite face du boîtier, ce joint compensant les contraintes thermiques auxquelles est soumise la sonde, un fourreau qui traverse le boîtier en regard de l'embase du cône et qui maintient les extrémités respectives de ces fibres dans une position relative déterminée en regard de l'embase du cône.

Selon une première variante de l'invention, l'axe du cône est parallèle au rayon incident et au rayon éventuellement réfléchi, la base du cône recevant le rayon incident et étant perpendiculaire au rayon incident et au rayon éventuellement réfléchi.

Selon une autre variante, les fibres sont respectivement entourées de gaines de protection contre les contraintes thermiques et chimiques des deux milieux.

Selon une autre variante, la matière transparente du cône est le corindon ou le diamant.

Selon une autre variante, la sonde comprend une pluralité desdits cônes de révolution associés respectivement à des paires de fibres optiques, les premières extrémités des fibres d'émissions étant situées en regard d'une seule source lumineuse ou, respectivement en regard d'une pluralité de sources, chacune des secondes extrémités des fibres de réception étant située en regard d'un détecteur, le couvercle de fermeture comprenant une pluralité d'orifices de passages desdits cônes.

Selon une autre variante, la source lumineuse est une source laser ou est constituée par des diodes électroluminescentes.

Selon une autre variante, chaque source de la pluralité de sources est une diode électroluminescente.

Selon une autre variante, chaque fibre optique comprend une âme en silice pure entourée d'une couche de silice dopée au fluor.

Selon encore une autre variante, la gaine de protection est en acier inoxydable.

Enfin, selon les revendications 9 et 10, respectivement, la sonde optique de l'invention s'applique à la détection du niveau de l'eau dans l'enceinte d'un générateur de vapeur d'une centrale nucléaire et à la détermination des composants d'un milieu diphasique.

Les caractéristiques et avantages de l'invention ressortiront mieux de la description qui va suivre, donnée en référence aux dessins annexés dans lesquels :

- la figure 1 représente schématiquement une sonde optique conforme à une variante de l'invention,

- la figure 2 représente schématiquement et en coupe, le boîtier de montage du moyen optique de réfraction ou de réflexion, utilisé dans la variante de l'invention mentronnée ci-dessus,

- la figure 3 représente schématiquement une sonde conforme à une autre variante de l'invention, dans laquelle sont utilisés une pluralité de moyens optiques de réfraction ou de réflexion.

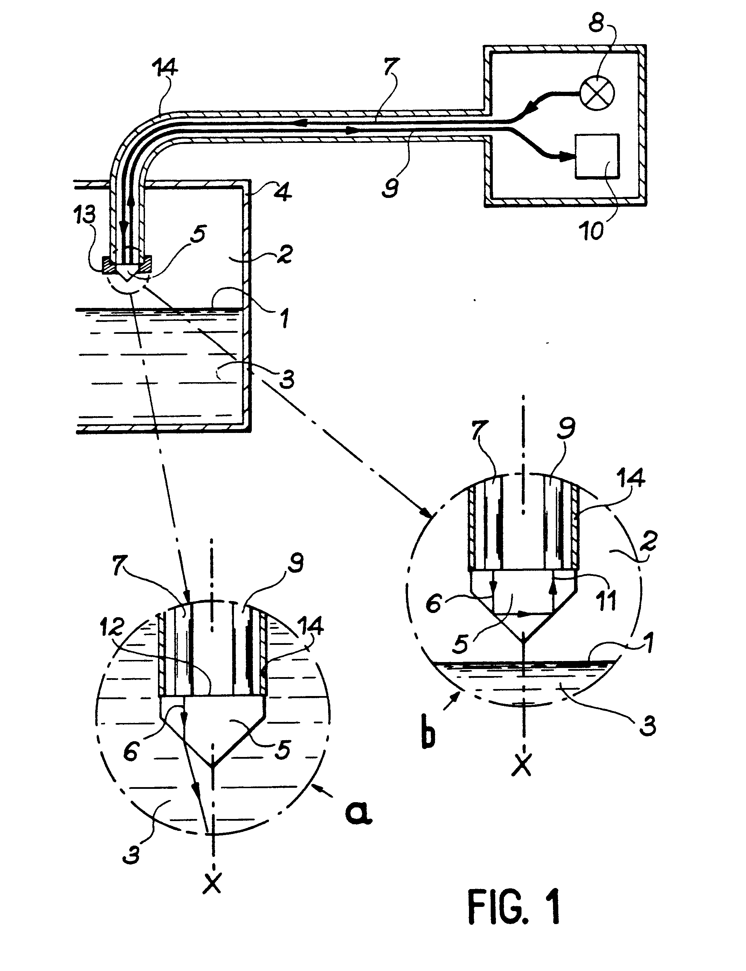

La figure 1 représente schématiquement une sonde optique conforme à une variante de l'invention. Cette sonde permet, comme on le verra plus loin en détail, de détecter l'interface de séparation 1 de deux milieux 2, 3, d'indices de réfraction différents, contenus dans une enceinte 4, et qui peuvent être respectivement gazeux et liquides par exemple. Elle peut aussi permettre de déterminer les composants d'un milieu diphasique, à partir des indices optiques respectifs des composants. Elle comprend un moyen optique 5 de réfraction ou de réflexion de rayon incident, de forme conique, qui sera décrit plus loin en détail et qui est situé dans l'enceinte 4. Ce moyen optique 5 qui possède un indice de réfraction prédéterminé est capable de réfracter un rayon lumineux incident 6, lorsqu'il est situé dans le composant dont l'indice est inférieur à l'indice prédéterminé, tel que représenté sur une vue agrandie a de l'extrémité de la sonde.

Dans l'exemple d'application représenté sur cette figure, ce milieu est par exemple l'eau d'un générateur de vapeur d'une centrale nucléaire. Cette eau, dans ce cas, est déminéralisée, à haute température, présente un pH neutre et contient de l'ammoniaque. Elle se comporte comme un acide. Ce moyen optique est aussi capable de réfléchir un rayon incident 6, lorsqu'il est situé dans le composant dont l'indice est inférieur à son indice prédéterminé. Dans l'exemple d'application représenté sur la figure, ce composant est gazeux (vapeur d'eau + ammoniac par exemple). Il est représenté en 2 sur la figure, au-dessus de la surface 1 du milieu liquide 3, tel que le montre la vue agrandie b de l'extrémité de la sonde. La sonde comprend aussi un moyen 7 pour transmettre le rayon lumineux incident depuis une source lumineuse 8 vers le moyen optique de réfraction ou de réflexion, et un moyen 9 pour transmettre le rayon lumineux éventuellement réfléchi par le moyen optique 5, vers un détecteur optoélectronique 10. Le moyen optique 5 de réfraction ou de réflexion est un cône qui est constitué dans une matière transparente aux rayons lumineux de la source 8 ; cette matière peut être du diamant ou du corindon ($Al_2O_3$) dont l'indice de réfraction est voisin de 1,7. L'axe X de ce cône est parallèle au rayon incident 6 ainsi qu'au rayon éventuellement réfléchi 11. La base 12 du cône reçoit le rayon lumineux incident, comme on le verra plus loin en détail. La source lumineuse 8 peut être constituée par exemple par un laser de type hélium-néon ou par tout autre moyen produisant des rayons lumineux intenses, par exemple une diode électroluminescente. Le cône peut être à base circulaire ou elliptique par exemple ; son axe est perpendiculaire à la base.

Dans l'exemple de réalisation représenté sur la figure et comme indiqué plus haut, l'enceinte 4 peut être par exemple celle d'un générateur de vapeur d'une centrale nucléaire, le milieu liquide 3 étant de l'eau mélangée avec de l'ammoniaqué, à une température voisine de 300°C. Le milieu gazeux 2 est constitué par de la vapeur d'eau mélangée à de l'ammoniac. Dans cet exemple d'application, la sonde permet de déterminer le niveau du liquide dans l'enceinte. On a également représenté sur cette figure un boîtier étanche 13 de fixation du moyen optique 5 (qui sera décrit plus loin), ainsi qu'une gaine 14 étanche de protection (en acier inoxydable de préférence) des moyens optiques de transmission 7, 9, contre les contraintes thermiques et chimiques. Les moyens de transmission sont constitués par une paire de fibres optiques comprenant une fibre d'émission 7 des rayons lumineux incidents, émis par la source 8, et une fibre optique 9 de réflexion du rayon 11 éventuellement réfléchi par le moyen optique 5. Dans le cas où la sonde est destinée à repérer le niveau de l'eau dans le générateur de vapeur d'une installation nucléaire, les fibres optiques doivent être capables de résister à des températures voisines de 300°C, en présence de radiations. Ces fibres, pour cet exemple particulier d'application, possèdent âme en silice pure entourée d'une couche de protection en silice dopée au fluor. La couche en silice dopée au flour permet de protéger l'âme de la fibre contre les effets des radiations (notamment en site nucléaire) ; elle favorise aussi la bonne tenue mécanique de la fibre lorsque celle-ci doit être courbée pour suivre un chemin déterminé. Cette couche de silice dopée est elle-même entourée d'une couche, par exemple en polymide, qui renforce la tenue mécanique de la fibre.

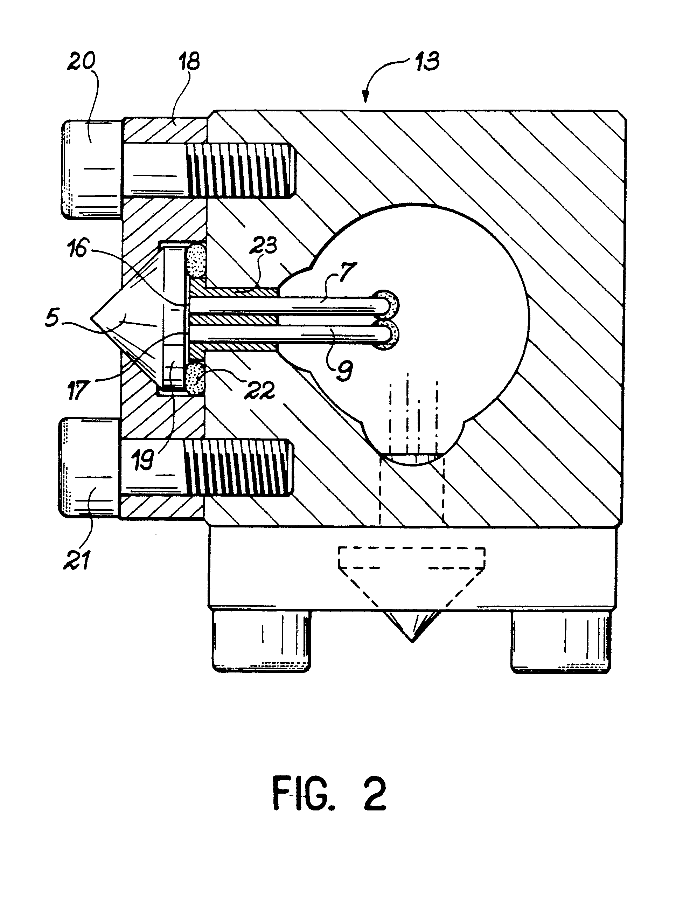

La figure 2 représente schématiquement et en coupe l'extrémité de la variante de la sonde conforme à l'invention, au voisinage du cône de réfraction ou de réflexion 5, et au voisinage des extrémités 16, 17, des fibres optiques 7, 9 qui permettent de transmettre un rayon incident vers le cône 5 ou de transmettre un rayon réfléchi par ce cône, vers un détecteur, non représenté ici. On a représenté sur cette figure un boîtier étanche 13 qui permet de maintenir le cône 5, grâce à un couvercle 18 muni d'un orifice. Le cône présente une embase 19 qui permet sa mise en place sur le boîtier 13, grâce au couvercle 18 maintenu par les vis 20, 21. L'embase 19 du cône 5 repose sur le boîtier 13, par l'intermédiaire d'un joint d'étanchéité 22 (de préférence un joint à ressort). Les fibres optiques 7, 9, qu'on suppose entourées de leur gaine de protection, traversent le boîtier 13 et, en regard de la base du cône 5, leurs extrémités 16, 17 sont maintenues dans une position relative déterminée, grâce à un fourreau 23. Les deux autres extrémités des fibres optiques ne sont pas représentées sur cette figure. Ces deux autres extrémités sont situées respectivement en regard de la source lumineuse 8 et en regard du détecteur 10. Comme on l'a indiqué plus haut, les portions de fibres optiques qui sont situées dans l'enceinte 4 à la traversée de cette enceinte (figure 1) sont entourées de la gaine étanche de protection, de préférence en acier inoxydable lorsque le milieu est hostile. La forme conique du moyen optique 5 dont l'embase repose sur un joint élastique 22 assure une excellente étanchéité du boîtier, notamment lorsque la sonde intervient dans un milieu à haute température et que ses éléments sont soumis à des contraintes de dilatation. Le cône 5 étant de révolution, son positionnement est aisé, alors qu'avec un prisme, ce positionnement est délicat.

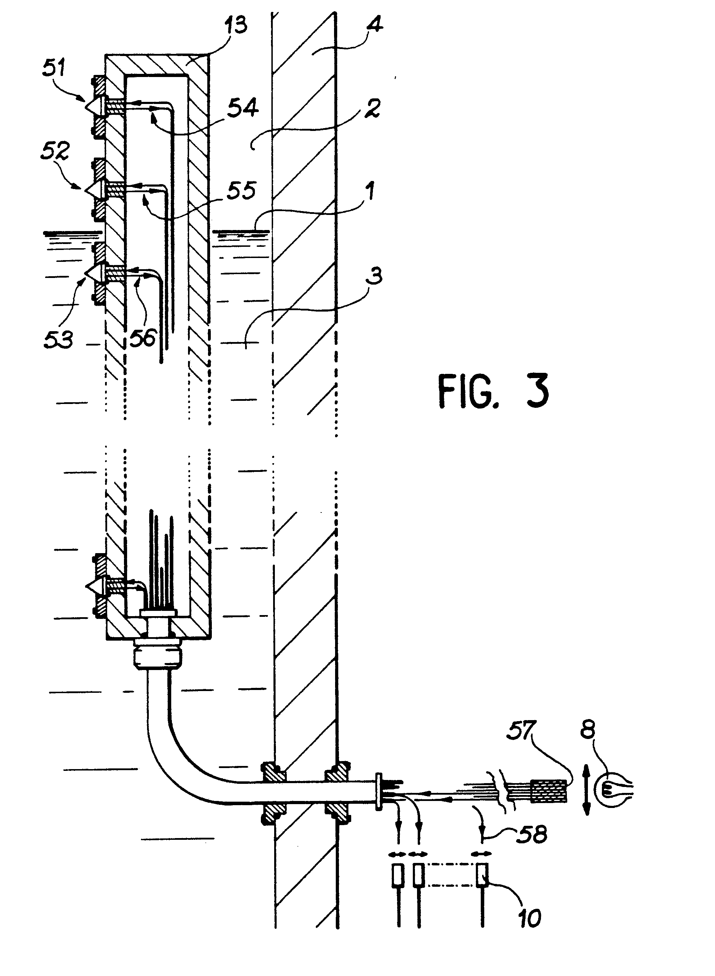

La figure 3 représente schématiquement une autre variante de réalisation de la sonde conforme à l'invention. Les mêmes éléments portent les mêmes références sur cette figure et sur les figures précédentes. Cette sonde est placée dans une enceinte 4 qui peut être par exemple celle d'un générateur de vapeur contenant de l'eau 3 et de la vapeur 2, le niveau de la surface de l'eau étant représenté en 1. Dans ce mode de réalisation, la sonde comporte une pluralité de cônes de révolution de réfraction ou de réflexion 51, 52, 53,..., associés respectivement à des paires de fibres optiques 54, 55, 56,... Deux des extrémités des fibres de chaque paire sont situées en regard de chaque cône 51. Les autres extrémités 57 des fibres d'émission sont situées en regard d'une source 8, un laser par exemple qui éclaire simultanément toutes ces autres extrémités, ou une pluralité de sources telles que des diodes électroluminescentes, chaque diode éclairant une fibre ; chacune des extrémités 58 des fibres de réflexion est fixée en regard d'un détecteur 10. Dans ce mode de réalisation, les cônes sont montés dans un boîtier 13 tel que décrit plus haut, comportant un couvercle muni d'une pluralité d'orifices de fixation des cônes sur le boîtier. Grâce à cette sonde, il est possible de suivre les variations de niveau 1 de l'eau 3 dans l'enceinte 4 : les détecteurs 10 qui sont situés en regard des extrémités 58 des fibres de réception qui correspondent à des cônes situés au-dessus du niveau 1 de l'eau 3, reçoivent un signal lumineux, tandis que tous les détecteurs qui sont situés en regard des extrémités des fibres correspondant à des cônes immergés en-dessous du niveau 1, ne reçoivent aucun signal lumineux. Dans ce mode de réalisation, la sonde permet bien de détecter l'interface de séparation de deux milieux d'indices optiques différents ; elle permet aussi de suivre les variations de niveau de cet interface. On peut envisager aussi de choisir des cônes d'indices de réfraction différents pour déterminer la composition ou l'évolution de composition d'un milieu diphasique. Il y a en effet réfraction ou réflexion par un cône selon que son indice optique est inférieur ou supérieur au composant qui l'environne.

Les extrmités des cônes de réfraction ou de réflexion peuvent éventuellement être tronquées, sans nuire au fonctionnement de la sonde.

**Revendications**

1. Sonde optique pour la détection de l'interface de séparation de deux milieux (2, 3) hostiles d'indices optiques différents contenus dans une enceinte comprenant au moins un cône (5) de révolution constitué dans une matière transparente d'indice de réfraction prédéterminé, capable de réfracter un rayon lumineux incident (6) s'il est situé dans l'un des deux milieux (3) dont l'indice de réfraction est supérieur à l'indice prédéterminé et capable de réfléchir ce rayon lumineux incident (6) s'il est situé dans l'un des deux milieux (2) dont l'indice est inférieur à l'indice prédéterminé, un boîtier (13) étanche dont une face supporte une embase (19) du cône (5), caractérisée en ce qu'elle comporte au moins une paire (7, 9) de fibres optiques traversant le boîtier (13) et comprenant une fibre optique d'émission (7) pour transmettre le rayon lumineux incident (6) depuis une source lumineuse (8) vers la base (12) du cône (5) et une fibre optique de réception (9) pour transmettre à un détecteur optoélectronique (10) le rayon éventuellement réfléchi, la source et le détecteur étant extérieurs à l'enceinte, un couvercle (18) fermant le boîtier (13) et muni d'un orifice conique de passage du cône (5) et dont le pourtour s'appuie sur le cône (5), un joint d'étanchéité (22) interposé entre l'embase (19) du cône (5) et ladite face du boîtier, ce joint (22) compensant les contraintes thermiques auxquelles est soumise la sonde, un fourreau (23) qui traverse le boîtier (13) en regard de l'embase (19) du cône (5) et qui maintient les extrémités (16, 17) respectives de ces fibres (7, 9) dans une position relative déterminée en regard de l'embase (19) du cône (5).

2. Sonde optique selon la revendication 1, caractérisée en ce que l'axe (X) du cône (5) est paralléle au rayon incident (6) et au rayon éventuellement réfléchi (11), la base (12) du cône (5) recevant le rayon incident (6) étant perpendiculaire au rayon incident (6) et au rayon éventuellement réfléchi (11).

3. Sonde selon la revendication 2, caractérisée en ce que les fibres (7, 9) sont respectivement entourées de gaines de protection contre les contraintes thermiques et chimiques des deux milieux (2, 3).

4. Sonde optique selon la revendication 2, caractérisée en ce que la matière transparente est le diamant ou le corindon.

5. Sonde optique selon la revendication 2, caractérisée en ce qu'elle comprend une pluralité desdits cônes (51, 52, 53,...) de révolution associés respectivement à des paires de fibres optiques (54, 55, 56,...), les premières extrémités (57) des fibres d'émissions étant situées en regard d'une seule source lumineuse (8) ou, respectivement en regard d'une pluralité de source (8), chacune des secondes extrémités (58) des fibres de réception étant située en regard d'un détecteur (10), le couvercle (18) de fermeture comprenant une pluralité d'orifices de passages desdits cônes.

6. Sonde optique selon la revendication 5, caractérisée en ce que la source lumineuse est une source laser ou en ce que les sources de ladite pluralité sont respectivement des diodes électroluminescentes.

7. Sonde optique selon la revendication 6, caractérisée en ce que chaque fibre optique comprend une âme centrale en silice pure entourée d'une couche de silice dopée au fluor.

8. Sonde optique selon la revendication 7, caractérisée en ce que ladite gaine est en acier inoxydable.

9. Application de la sonde conforme à l'une quelconque des revendications 1 à 8, à la détection du niveau de l'eau dans l'enceinte d'un générateur de vapeur d'une centrale nucléaire.

10. Application de la sonde conforme à l'une quelconque des revendications 1 à 8, à la détermination des composants de milieux diphasiques.

**Patentansprüche**

1. Optische Sonde zum Erfassen der Trennschicht zweier feindlicher Medien (2, 3) mit unterschiedlichem Brechungsindex, die in einem Raum enthalten sind, mit wenigstens einem Drehkegel (5), der aus einem transparenten Material mit vorbestimmtem Brechungsindex gebildet ist, der einen einfallenden Lichtstrahl (6) brechen kann, wenn er sich in einem der zwei Medien (3) befindet, dessen Brechungsindex größer als der vorbestimmte Brechungsindex ist, und diesen einfallenden Lichtstrahl (6) reflektieren kann, wenn er sich in einem der zwei Medien (2) befindet, dessen Brechungsindex kleiner als der vorbestimmte Brechungsindex ist, einem dichten Gehäuse (13), dessen eine Seite ein Basisteil (19) des Kegels (5) hält, *dadurch gekennzeichnet*, daß die Sonde wenigstens ein Paar (7, 9) optischer Fasern aufweist, die das Gehäuse (13) durchqueren und eine optische Sendefaser (7) zum Übertragen des einfallenden Lichtstrahls (6) von einer Lichtquelle (8) zu der Basis (12) des Kegels (5) und eine optische Empfangsfaser (9) zum Übertragen eines gegebenenfalls reflektierten Strahls (10) zu einem optoelektronischen Detektor (10) umfassen, wobei sich die Quelle und der Detektor außerhalb der Raumes befinden, mit einem Deckel (18), der das Gehäuse (13) schließt und mit einer konusförmigen Durchtrittsöffnung für den Kegel (5) versehen ist, deren Umfang an dem Kegel (5) anliegt, einer Dichtung (22), die zwischen dem Basisteil (19) des Kegels (5) und der genannten Seite des Gehäuses zwischengefügt ist, wobei diese Dichtung (22) die Wärmespannungen ausgleicht, denen die Sonde ausgesetzt ist, eine Hülse (23), die das Gehäuse (13) gegenüber dem Basisteil (19) des Kegels (5) durchquert und die jeweiligen Enden (16, 17) dieser Fasern (7, 9) in einer vorbestimmten Position dem Basisteil (19) des Kegels (5) gegenüberliegend aufrechthält.

2. Optische Sonde nach Anspruch 1, *dadurch gekennzeichnet*, daß die Achse (X) des Kegels (5) parallel zu dem einfallenden Strahl (6) und zu dem gegebenenfalls reflektierten Strahl (11) verläuft, wobei die den einfallenden Strahl (6) empfangende Basis (12) des Kegels (5) senkrecht zu dem einfallenden Strahl (6) und zu dem gegebenenfalls reflektierten Strahl (11) ist.

3. Sonde nach Anspruch 2, *dadurch gekennzeichnet*, daß die Fasern (7, 9) jeweils mit Schutzumhüllungen gegen die Wärmespannungen und chemischen Belastungen der zwei Medien (2, 3) umgeben sind.

4. Optische Sonde nach Anspruch 2, *dadurch gekennzeichnet*, daß das transparente Material Diamant oder Korund ist.

5. Optische Sonde nach Anspruch 2, *dadurch gekennzeichnet*, daß sie eine Vielzahl der genannten Drehkegel (51, 52, 53,...) aufweist, die jeweils Paaren von optischen Fasern (54, 55, 56,...) zugeordnet sind, sich die ersten Enden (57) der Sendefasern einer einzigen Lichtquelle (8) oder einer Vielzahl von Quellen (8) gegenüberliegend befinden, sich jedes der zweiten Enden (58) der Empfangsfasern einem Detektor (10) gegenüberliegend befindet, der Abschlußdeckel (18) eine Vielzahl von Durchtrittsöffnungen für die genannten Kegel aufweist.

6. Optische Sonde nach Anspruch 5, *dadurch gekennzeichnet*, daß die Lichtquelle eine Laserquelle ist und daß die Quellen der genannten Vielzahl jeweils Leuchtdioden sind.

7. Optische Sonde nach Anspruch 6, *dadurch gekennzeichnet*, daß jede optische Faser einen mittleren Kern aus reinem Silicium aufweist, der von einer Schicht aus mit Fluor dotiertem Silicium umgeben ist.

8. Optische Sonde nach Anspruch 7, *dadurch gekennzeichnet*, daß die genannte Umhüllung aus rostfreiem Stahl ist.

9. Anwendung der Sonde nach irgendeinem der Ansprüche 1 bis 8 zum Erfassen des Wasserspiegels in dem Behälter eines Dampfgenerators eines Kernkraftverks.

10. Anwendung der Sonde nach irgendeinem der Ansprüche 1 bis 8 zum Bestimmen der Bestandteile von zweifasrigen Medien.

**Claims**

1. Optical probe for the detection of the separating interface of two hostile media (23) having different optical indices contained in an enclosure, comprising at least one cone (5) of revolution made from a transparent material and having a predetermined refractive index able to refract an incident light beam (6) if it is located in one of the two media (3) whose refractive index is higher than the predetermined index and is able to reflect this incident light beam (6) if it is located in one of the two media (2) whose index is below the predetermined index, a tight casing (13), whereof one face supports a base (19) of the cone (5), characterized in that it has at least one pair (7, 9) of optical fibres traversing the casing (13) and having an optical emission fibre (7) for transmitting the incident light beam (6) from a light source (8) to the base (12) of the cone (5) and an optical reception fibre (9) for transmitting to an optoelectronic detector (10) the optionally reflected beam, the source and detector being outside the enclosure, a cover (18) closing the casing (13) and provided with a conical passage orifice for the cone (5) and whereof the periphery bears on the cone (5), a gasket (22) interposed between the base (19) of the cone (5) and said face of the casing, said gasket (22) compensating

**0 124 415**

the thermal stresses to which the probe is exposed, a sleeve (23) which traverses the casing (13) facing the base (19) of the cone (5) and which maintains the respective ends (16, 17) of these fibres (7, 9) in a given relative position facing the base (19) of the cone (5).

2. Optical probe according to claim 1, characterized in that the axis (X) of the cone (5) is parallel to the incident beam (6) and to the optionally reflected beam (11), the base (12) of the cone receiving the incident beam (6) being perpendicular to the incident beam (6) and to the optionally reflected beam (11).

3. Probe according to claim 2, characterized in that the fibres (7, 9) are respectively surrounded by sheaths providing protection against the thermal and chemical stresses of the two media (2, 3).

4. Optical probe according to claim 3, characterized in that the transparent material is diamond or corundum.

5. Optical probe according to claim 2, characterized in that it comprises a plurality of said cones (51, 52, 53) of revolution, respectively associated with pairs of optical fibres (54, 55, 56), the first ends (57) of the emission fibres being positioned facing a single light source (8) or, respectively facing a plurality of sources (8), each of the second ends (58) of the reception fibres being positioned facing a detector (10), the closing cover (18) having a plurality of openings for the passage of said cones.

6. Optical probe according to claim 5, characterized in that the light source is a laser source or that the sources of said plurality are respectively light-emitting diodes.

7. Optical probe accoridng to claim 6, characterized in that each optical fibre comprises a central pure silica core surrounded by a fluorine-doped silica coating.

8. Optical probe according to claim 7, characterized in that the sheath is made from stainless steel.

9. Application of the probe accoridng to any one of the claims 1 to 8 to the detection of the level of the water in an enclosure of a steam generator of a nuclear power station.

10. Application of the probe according to any one of the claims 1 to 8 to the determination of the components of twophase media.

**FIG. 1**

FIG. 2

FIG. 3